Europäisches Patentamt

European Patent Office

Office européen des brevets

(11) Numéro de publication: **0 229 567 B1**

(12) **FASCICULE DE BREVET EUROPEEN**

(45) Date de publication de fascicule du brevet:
02.05.91

(51) Int. Cl.⁵: **B25J 15/00**, B65B 43/18,
B65B 51/06

(21) Numéro de dépôt: **86402916.0**

(22) Date de dépôt: **23.12.86**

(54) **Dispositif de manutention et son application à une installation de conditionnement.**

(30) Priorité: **24.12.85 FR 8519144**

(43) Date de publication de la demande:
**22.07.87 Bulletin 87/30**

(45) Mention de la délivrance du brevet:
**02.05.91 Bulletin 91/18**

(84) Etats contractants désignés:
**BE CH DE ES GB IT LI NL**

(56) Documents cités:
FR-A- 2 553 327
GB-A- 1 461 432
GB-A- 2 000 739

(73) Titulaire: **Thibault, Jacques Gabriel Auguste**
**35 rue Robert Legeay**
**F-94000 Creteil(FR)**

(72) Inventeur: **Thibault, Jacques Gabriel Auguste**
**35 rue Robert Legeay**
**F-94000 Creteil(FR)**

(74) Mandataire: **Tony-Durand, Serge**
**Cabinet Tony-Durand 77, rue Boissière**
**F-75116 Paris(FR)**

Rank Xerox (UK) Business Services

## Description

La présente invention concerne un dispositif de manutention à plusieurs degrés de libertés, équipé d'une tête de préhension spécialement conçue pour être en mesure d'effectuer, à elle seule, différentes opérations de manutention de natures diverses, devant être réalisées les unes à la suite des autres pour le conditionnement de produits et objets divers, par exemple dans des cartons.

La présente invention concerne en outre une installation de conditionnement comportant un tel dispositif de manutention, par exemple une installation de conditionnement par encartonage.

Pour des applications autres que le conditionnement de produits dans des emballages en l'occurrence pour le transport d'objets d'un point à un autre, on connaît déjà des dispositifs automatiques de manutention à 4, 5 ou 6 degrés de liberté. Ils sont généralement destinés à exécuter des taches délicates et difficiles avec une grande précision.

Ainsi, le GB 2.000.739, décrit un dispositif automatique de manutention comportant un bras horizontal mobile transversalement à lui-même, le long duquel se déplace un chariot portant une tête de travail (ou main de travail ou de préhension) adaptée à tourner autour d'un axe vertical. Cette tête de travail comporte un outil de préhension axial qui est adapté à saisir un objet dans le prolongement de l'arbre de rotation.

D'après le FR 2.553.327, on connait par ailleurs un robot de manutention comportant une tête de travail constituée par un bras horizontal d'une certaine longueur qui est porté par un arbre vertical rotatif. De part et d'autre de ce bras peuvent se déplacer deux outils de préhension orientés tous deux selon des axes parallèles à l'arbre rotatif et qui peuvent saisir en bout des pièces à manutentionner pour prendre chacune d'elles en un endroit déterminé et les déposer ensuite en un autre point. En réalité, il s'agit plutôt de la duplication du même outil de travail pour exécuter exactement la même opération. L'agencement est tel que ces outils puissent exécuter ce même travail en opposition de phase, ce qui permet simplement une cadence globale plus élevée qu'avec un seul outil.

Dans l'un et l'autre des deux cas rappelés cidessus, il s'agit d'appareils qui sont particulièrement bien adaptés à des opérations dites de palettisation, c'est-à-dire des opérations consistant à prélever des objets les uns à la suite des autres en un point déterminé pour les transporter en d'autres points suivant une répartition voulue. Toutefois de tels appareils ne peuvent pas convenir pour l'exécution de tâches de natures différentes, notamment pour des opérations de conditionnement d'objets ou produits divers, notamment le conditionnement de tels produits dans des cartons. En effet dans un tel cas il faut exécuter successivement diverses opérations de natures très différentes exigeant une série d'interventions distinctes, sur un même objet, dans des orientations différentes et avec des fonctions différentes.

Ainsi dans le cas du conditionnement de produits ou objets divers dans les cartons, il faut exécuter tout ou partie des opérations suivantes :
- saisie et dépliage (formage) de chaque carton,
- fermeture du fonds de chaque carton,
- remplissage de chaque carton avec les produits à conditionner,
- fermeture de chaque carton par le dessus, et
- palettisation.

La présente invention a également pour objet un robot de manutention, notamment adapté à exécuter des tâches de conditionnement, grâce à la mise en oeuvre d'une ou plusieurs tête(s) de travail à plusieurs fonctions.

L'invention a encore pour objet une installation de conditionnement comportant un robot à quatre degrés de liberté muni d'une tête multi-fonctions, ainsi que divers postes ou modules de traitement disposés dans le volume balayé par la tête, ou au bord de celui-ci, à chaque poste ou module étant associé au moins une opération élémentaire de conditionnement.

Ainsi, l'invention a pour premier objet un dispositif de manutention comportant une tête de préhension reliée à son support par un arbre de liaison et qui est équipée de deux outils de travail, caractérisé en ce que :
- le premier de ces deux outils consiste en un outil de préhension axiale adapté à saisir un objet dans le prolongement de l'arbre de liaison,
- le second outil est apte à agir, sur l'objet à manutentionner, selon une orientation différente de l'action du premier,
- les deux outils ainsi prévus sont adaptés à exécuter sur un emballage des opérations différentes intervenant dans sa mise en forme, sa manutention, son remplissage ou sa fermeture.

En raison de l'agencement de la tête de préhension du présent dispositif, celui-ci est particulièrement bien adapté à exécuter diverses opérations successives de conditionnement avec une préhension, par aspiration par exemple (voire par serrage mécanique), une déformation de contenants (ouverture de cartons et pliage de leur rabats notamment) et/ou des opérations classiques de manutention (encartonnage, encaissage, palettisation-dépalettisation...). La notion d'outil de conditionnement recouvre ici tout outil destiné à agir sur un emballage (carton, caisse...) en vue notamment de sa saisie, sa mise en forme et sa fermeture.

Selon une forme de réalisation préférée de l'invention, le second outil de travail prévu sur la tête de préhension est un outil de préhension latérale adapté à saisir un objet (emballage) transversalement à l'arbre de liaison entre cette tête de travail et son support.

Dans un mode d'exécution particulier de cette forme de réalisation, les dispositifs de préhension latérale et axiale comportent une cloche commune d'aspiration montée pivotante (sur 90° en pratique), ou deux cloches d'aspiration juxtaposées et orientées à angle droit ; l'une de ces cloches contient avantageusement des organes individuels de saisie, tels que des ventouses. Cette tête comporte de préférence un outil de fermeture comportant par exemple un ensemble de collage de papier gommé ou adhésif, et/ou un cadre pour le pliage des rabats supérieurs d'un carton. Une telle tête est avantageusement adaptée à s'équiper sélectivement d'outils appropriés aux tâches à accomplir, par exemple stockés sur une étagère, et pouvant être changés automatiquement par le robot lui-même.

Ledit autre outil de conditionnement peut aussi être constitué de cet outil de fermeture et/ou de ce cadre.

L'invention propose également un dispositif de manutention du genre comportant un bras horizontal adapté exclusivement à se déplacer transversalement à lui-même, le long duquel est monté coulissant un chariot-porteur sur lequel est montée, pivotante autour d'un axe vertical, une tête de préhension comportant un premier outil de conditionnement constitué par un dispositif de préhension axiale, caractérisé en ce que cette tête comporte un autre outil de conditionnement. Il s'agit par exemple d'un dispositif de préhension latérale. La combinaison de l'adaptabilité et de la souplesse de mouvement du robot proposé par le brevet GB-A- 2 000 739 précité, et des multiples fonctions qu'une tête du type précité permet d'assumer, se prête particulièrement bien à l'exécution d'une grande variété d'opérations industrielles. Un tel robot est avantageusement adapté à changer lui-même de tête de travail.

L'invention propose également une installation de conditionnement caractérisée en ce qu'elle comporte :

- un robot comportant un bras horizontal mobile transversalement à lui-même, le long duquel coulisse un chariot sur lequel est montée, pivotante, une tête de travail munie d'un premier outil de conditionnement constitué d'un dispositif de préhension verticale et d'au moins un second outil de conditionnement,
- un magasin de cartons pliés à plat, accessible à la tête, et
- un poste de remplissage de cartons.

Il s'agit ici d'une application du dispositif précité de manutention au mode particulier de conditionnement que constitue l'encartonnage. De façon préférée cette installation comporte en outre des postes de pliage et de collage des rabats inférieurs de cartons, et/ou des postes de pliage et de collage des rabats supérieurs et/ou une station de palettisation.

Les objets, caractéristiques et avantages de l'invention ressortent de la description qui suit, donnée à titre d'exemple non limitatif, en regard des dessins annexés sur lesquels :

- la figure 1 est une vue en perspective d'une tête de travail conforme à l'invention,
- la figure 2 est une vue en perspective d'une installation de conditionnement conforme à l'invention, mettant en oeuvre une tête de travail similaire à celle de la figure 1,
- la figure 3 est une vue en perspective, dans une première configuration, d'une autre tête de travail conforme à l'invention,
- la figure 4 est une vue en perspective de cette autre tête de travail, dans une seconde configuration,
- la figure 5 est une vue en perspective, analogue à la figure 3, d'une variante de la tête de travail des figures 3 et 4,
- la figure 6 est une vue en perspective, analogue à la figure 2, d'une autre installation de conditionnement conforme à l'invention,
- la figure 7 est une vue en perspective d'une autre installation selon l'invention,
- la figure 8 est une vue en perspective de la tête de travail de l'installation de la figure 7, et
- la figure 9 est une vue en perspective d'une autre tête de travail conforme à l'invention.

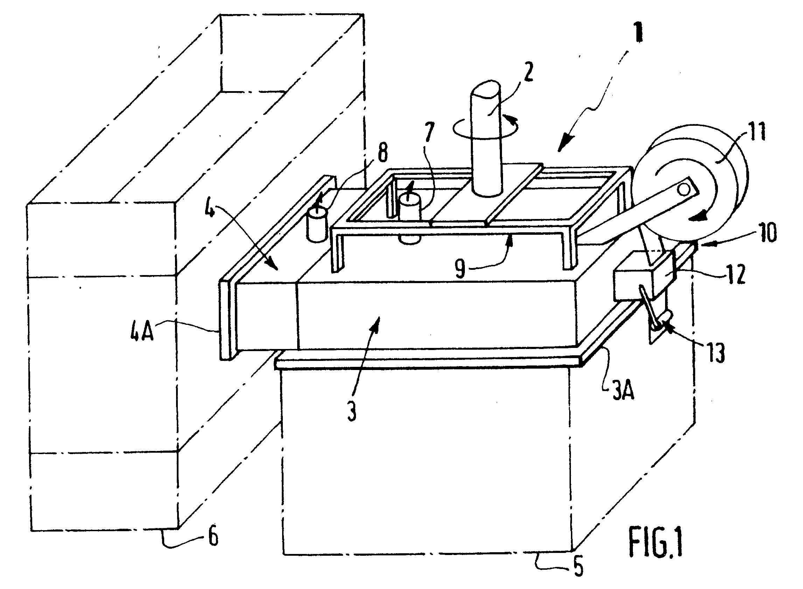

Telle que représentée à la figure 1 à titre d'exemple une tête de travail 1 (aussi appelée main de travail, de conditionnement ou de traitement) conforme à l'invention comporte un arbre 2, destiné à être engagé dans un porte-tête ou support mobile dont est muni un robot (polaire ou cartésien), un dispositif de préhension axiale 3 et un dispositif de préhension latérale 4.

La tête de travail 1 est adaptée à être montée pivotante autour de l'arbre 2 (généralement vertical) et le dispositif de préhension axiale 3 est un dispositif adapté à saisir un article (ou un emballage, colis ...) 5 disposé dans le prolongement de l'arbre 2 tandis que le dispositif de préhension latérale 4 est un dispositif adapté à saisir un article, emballage ou colis 6, selon une direction transversale perpendiculaire à l'arbre 2 et à l'axe de rotation qu'il matérialise.

Ces dispositifs de préhension axiale 3 et latérale 4 sont ici constitués de deux cloches d'aspiration distinctes mais accolées, connectées par des conduits 7 et 8 à une source d'aspiration (non représentée). Ces cloches d'aspiration sont ici constituées de chambres sensiblement parallélépipèdiques, qui déterminent conjointement un volume également sensiblement parallélépipèdique, dont les faces sont soit parallèles, soit perpendiculaires à l'arbre 2. La cloche d'aspiration axiale 3 est ouverte sur une face perpendiculaire à cet arbre et est bordée par une collerette d'application 3A tandis que la cloche d'aspiration latérale 4 est ouverte sur une face parallèle à l'arbre 2 et est également bordée par une collerette d'application 4A. En variante non représentée ces cloche sont séparées l'une de l'autre par une paroi à 45°.

L'arbre 2 est relié aux cloches 3 et 4 par une armature 9.

Sur une face latérale de la cloche d'aspiration axiale 3, à l'opposé de la cloche 4, est disposé un accessoire de conditionnement 10, ici constitué d'un ensemble de collage de papier gommé ou adhésif, comportant un rouleau de papier 11, un humidificateur 12 traversé par le papier et un rouleau applicateur 13 muni d'un couteau. Ces trois éléments sont sensiblement alignés parallèlement au fond de la cloche d'aspiration latérale 4.

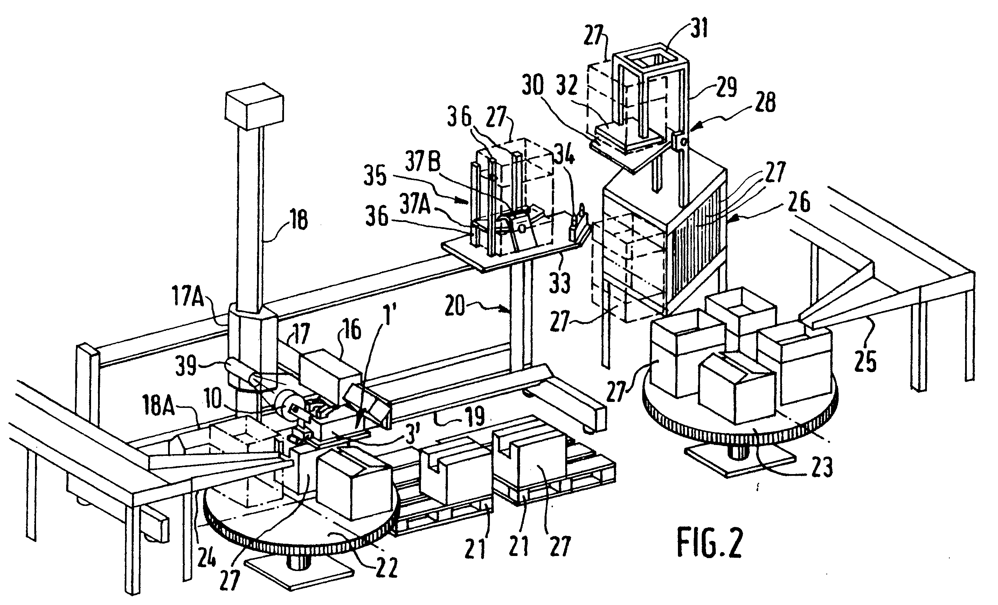

La figure 2 représente une installation de conditionnement mettant en oeuvre une tête de travail 1' tout à fait similaire à la tête 1 de la figure 1, à ceci près que l'armature reliant l'arbre et la cloche d'aspiration axiale 3' est ici en forme de croix.

Cette tête 1' est montée pivotante, autour de son arbre vertical, dans un chariot-porteur 16 monté coulissant de long d'un bras horizontal 17 adapté à être déplacé transversalement à lui-même (mais pas selon son axe). Ce bras est solidaire d'un manchon 17A adapté à coulisser le long d'un mât vertical 18, lui-même solidaire d'un manchon 18A adapté à coulisser le long d'une poutre horizontale 19 solidaire d'un châssis 20 fixe. La tête 1' est ainsi portée par le chariot d'un robot conforme aux enseignements du brevet français 77.21226 déjà cité. Pour des raisons de lisibilité de la figure, des organes associés de commande et d'entraînement ne sont pas représentés.

Dans le volume balayé par le bras 17 lors de ses mouvements transversaux sont disposés deux palettes 21 et deux tables pivotantes 22 et 23. Des goulottes 24 et 25 d'alimentation de produits en vrac surplombent ces tables.

Sur un côté du volume balayé par le bras 17 est disposé un magasin 26 de cartons verticaux 27 pliés à plat avec leurs rabats s'étendant verticalement.

Au-dessus de ce magasin est disposé un poste 28 de collage de fonds de cartons, comportant des barres verticales 29, sur lesquelles est articulée une plaque pivotante 30, reliées à leurs extrémités supérieures à une potence 31 portant une plaque horizontale 32 de dimensions inférieures au fond d'un carton 27 déplié (représenté en pointillés). Sous l'action d'organes de commande appropriés (non représentés) la plaque pivotante 30 peut prendre une position horizontale juste en-dessous la plaque horizontale 32.

Sur un coin du châssis 20 du robot est fixé un plateau 33 sur lequel sont disposés des buses d'encollage 34 ainsi qu'un poste 35 de formation de fond comportant des butées verticales 36 définissant un dièdre d'appui latéral de cartons à la partie inférieure duquel sont disposés des guides de pliage 37 pour le pliage des rabats inférieurs d'un carton. Ces guides sont ici constitués de deux longues plaques recourbées disposées en croix dont l'une, 37A, a sa concavité tournée vers le haut et l'autre, 37B, disposée au-dessus de la première, a sa concavité tournée vers le bas.

Sur cette figure 2 apparaissent divers cartons 27 en diverses étapes de leur formation (auprès des éléments 26, 28 et 35), de leur remplissage et de leur fermeture (sur les tables tournantes 22 et 23) et de leur palettisation (sur les palettes 21).

Ces cartons 27 sont successivement traités ou manipulés par les divers organes que comporte la tête de travail 1'.

La tête 1' est d'abord amenée auprès du magasin 26 de manière à ce que sa cloche latérale vienne s'appliquer contre un carton à plat. Par mise en dépression, cette cloche saisit le carton et, par recul, provoque le dépliage de ce dernier, les rabats restant verticaux. Le tête 1' est ensuite déplacée et orientée en sorte d'amener le carton en butée latérale contre les barres 36. Par abaissement sur les guides 37, les rabats de grandes dimensions sont maintenus verticaux tandis que les petits rabats sont repliés vers l'intérieur. La tête est ensuite déplacée en sorte d'amener ces petits rabats en regard des buses d'encollage 34 qui les enduisent de colle. La plaque basculante 30 étant mise en position verticale, on déplace la tête en sorte d'amener ces rabats contre la plaque fixe 32. Par pivotement vers une position horizontale, la plaque basculante 30 applique les grands rabats contre ces petits rabats enduits de colle, assurant ainsi le collage du fond du carton.

Ce carton est ensuite posé et laissé sur une des tables pivotantes en vue, après des rotations de 90°, de leur remplissage par du vrac déversé par l'une des goulottes 24 ou 25. La tête 1' est alors manoeuvrée au-dessus du carton en sorte de rabattre à l'horizontale les rabats supérieurs du carton par des mouvements appropriés de la collerette de la cloche de préhension axiale. On applique ensuite, grâce à l'ensemble 10, du papier adhésif pour fermer le carton (c'est cette opération que représente la figure 2).

La cloche d'aspiration axiale 3' est ensuite appliquée sur le dessus du carton puis mise en dépression pour la saisie de ce dernier. Le carton est ensuite avantageusement amené en regard d'un dispositif d'impression 39 (à projection d'encre ou à laser, ou à pose d'étiquettes ... par exemple) par exemple porté par le manchon coulissant 17A. Le carton est enfin positionné de façon appropriée sur une palette 21.

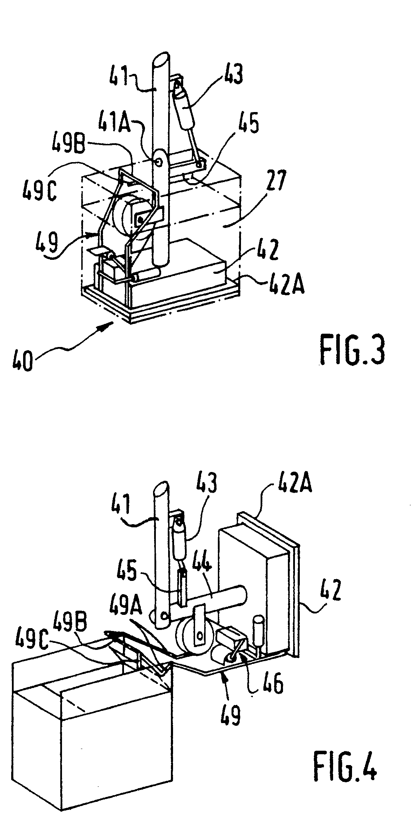

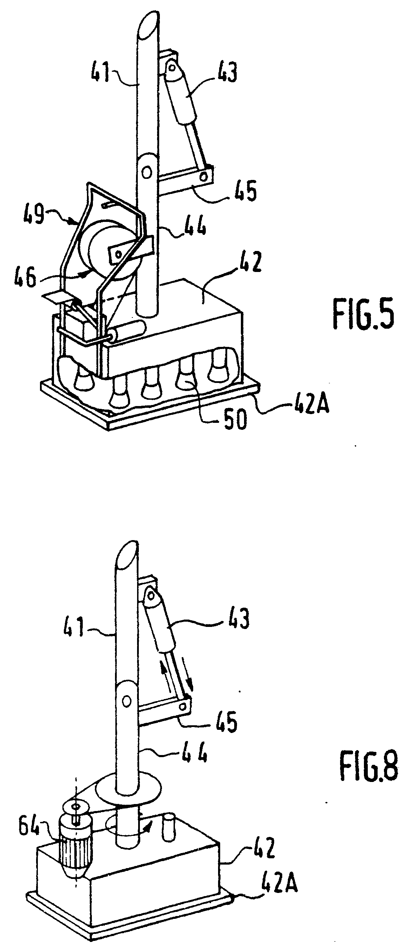

Les figures 3 et 4 illustrent un autre mode de réalisation d'une tête de préhension selon l'invention.

Cette tête 40 comporte de même un arbre 41 de liaison tournante avec un chariot-porteur, un dispositif de préhension axiale et un dispositif de préhension latérale.

A la différence de la tête de la figure 1, des dispositifs de préhension axiale et latérale comportent un même organe de préhension 42, mais celui-ci est articulé sur l'arbre 41 autour d'un axe transversal 41A, et est placé sous le contrôle d'un organe de commande 43 qui détermine la configuration de la tête.

Comme dans la figure 1, l'organe de préhension 42 est ici une cloche d'aspiration globalement parallélépipèdique dont une face, ouverte, est bordée par une collerette 42A. Pour des raisons de lisibilité aucun conduit (souple) de raccordement à une source d'aspiration appropriée n'a été représentée.

Au fond de cette cloche est fixée une barre 44 articulée sur l'arbre 42, é laquelle est rapportée une traverse 45 à l'extrémité de laquelle agit un vérin pneumatique (ou hydraulique de préférence), par ailleurs fixé à l'arbre 41, et constituant ledit organe de commande 43.

Lorsque le vérin est allongé, la cloche d'aspiration 42 peut agir en tant que dispositif de préhension axiale (figure 3), tandis que lorsque le vérin est rétracté, la cloche 42 agit en tant que dispositif de préhension latérale (figure 4).

Comme précédemment, cette tête est avantageusement munie d'un ensemble 46 d'application de papier adhésif dont l'humidificateur 47 et le rouleau applicateur 48 sont sensiblement alignés parallèlement au fond de la cloche 42.

Le long d'une face latérale de cette cloche, de préférence à proximité dudit ensemble 46, est fixé un cadre 49 de rabattage de rabats qui constitue également un outil de conditionnement. Ce cadre comporte deux branches 49A qui, d'abord parallèles à proximité de la cloche, s'écartent ensuite l'une de l'autre en étant situées dans un plan incliné se rapprochant de l'axe de la barre 44, puis dans un plan qui lui est parallèle. Ces branches divergentes 49A sont raccordées à leurs extrémités par une branche de liaison 49B d'où s'étend, sensiblement au milieu, un doigt 49C orienté transversalement à cette barre 44, à l'opposé de celle-ci.

La mise en oeuvre de cette tête ou main 40 est analogue à celle de la figure 1, à ceci près que la structure de cette main permet de se dispenser du poste de collage de fond 28 de la figure 2. En effet, ainsi qu'il ressort de la figure 3, cette tête peut s'introduire à l'intérieur du carton et jouer, pour le collage du fond du carton, le rôle de la plaque horizontale 32 de cette figure 2, par appui contre une plaque (non représentée), par exemple basculante comme la plaque 30 de la figure 2, ou contre tout autre appui.

Le cadre 49 se révèle avantageux pour le pliage des rabats supérieurs d'un carton. Lors d'un déplacement vers la droite de la tête 40, le doigt 49C plie à l'horizontale le petit rabat de gauche. Lors d'un déplacement vers la gauche de la tête, ce doigt plie le petit rabat de droite tandis que les branches divergentes forcent les grands rabats à se plier. Un nouveau mouvement longitudinal permet d'appliquer du papier adhésif sur ces grands rabats en sorte de fermer le carton. En variante non représentée un système à levier articulé plie simultanément les pettits rabats avant que le cadre ne commence à rabattre les grands rabats.

La figure 5 représente une version plus sophistiquée de la tête 40 des figures 3 et 4, dans laquelle des éléments individuels de préhension 50 sont disposés à l'intérieur de la cloche d'aspiration 42 ; ces éléments apparaissent à la faveur d'un arrachement partiel de la jupe latérale de la cloche 42. Ces éléments sont avantageusement des tulipes ou des ventouses adaptées à saisir individuellement des objets tels que des bidons ou des bouteilles notamment.

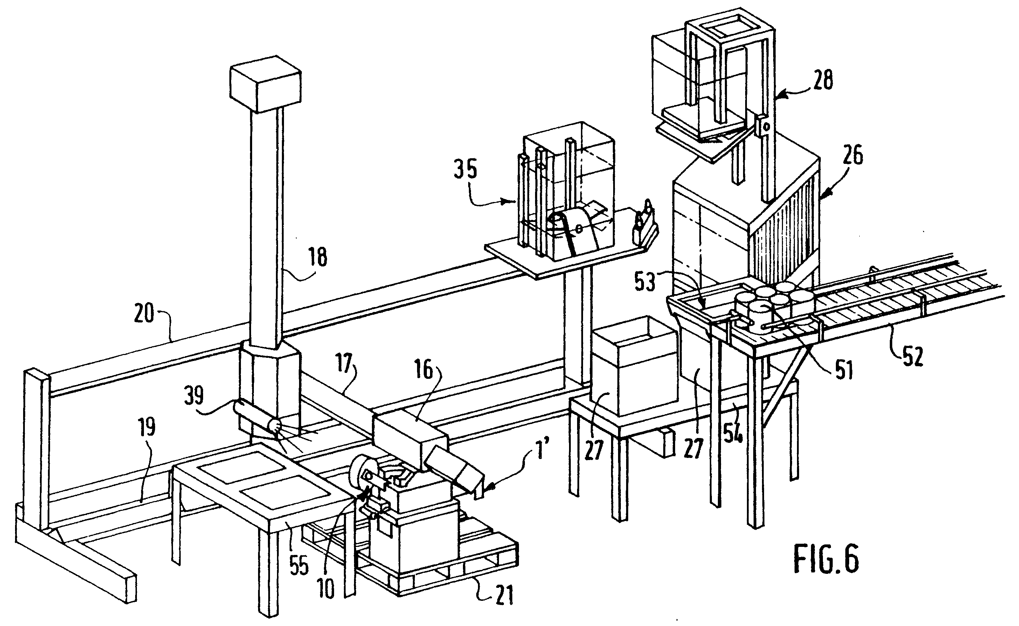

L'intérêt de tels éléments individuels de préhension ressort notamment de la figure 6 représentant une installation de chargement de cartons, non plus avec des produits en vrac, mais avec des objets 51 tels que des boîtes de conserve.

Comme pour la figure 2 cette installation comporte un robot avec une tête 1', un bras 17, munie d'un dispositif 10 de fermeture, un mât 18, une poutre 19 portée par un châssis 20, un magasin 26, des postes 28 et 35 et des palettes 21. Des éléments individuels de préhension, non visibles, sont disposés à l'intérieur de la cloche 3' d'aspiration axiale.

Les objets 51 à charger sont amenés par un convoyeur 52 à côté duquel est disposé un entonnoir 53. Les cartons formés sont posés sur une table 54 puis poussés sous l'entonnoir avant d'être chargés avec des objets 51.

Une table 55 d'accessoires est avantageusement prévue pour le stockage de têtes de travail à substituer les unes aux autres, ou d'outils à monter sélectivement sur une même tête.

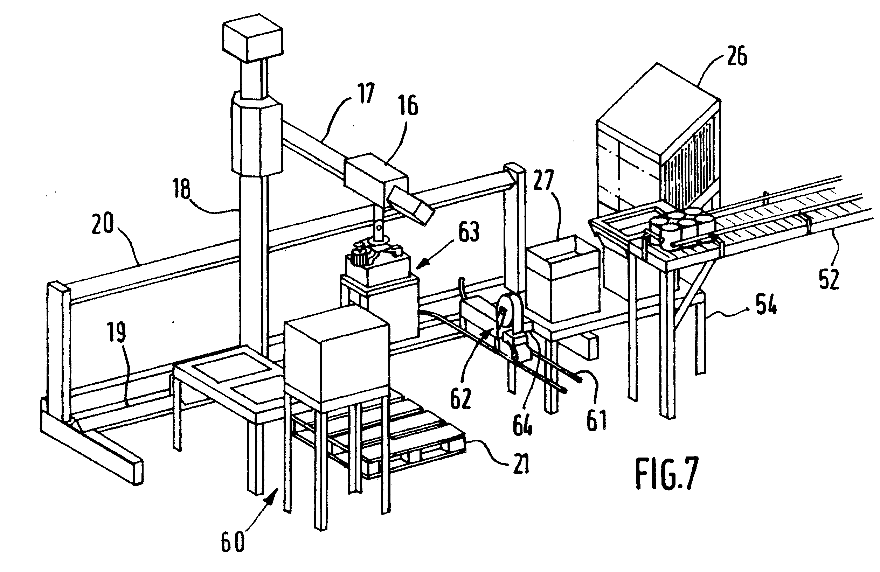

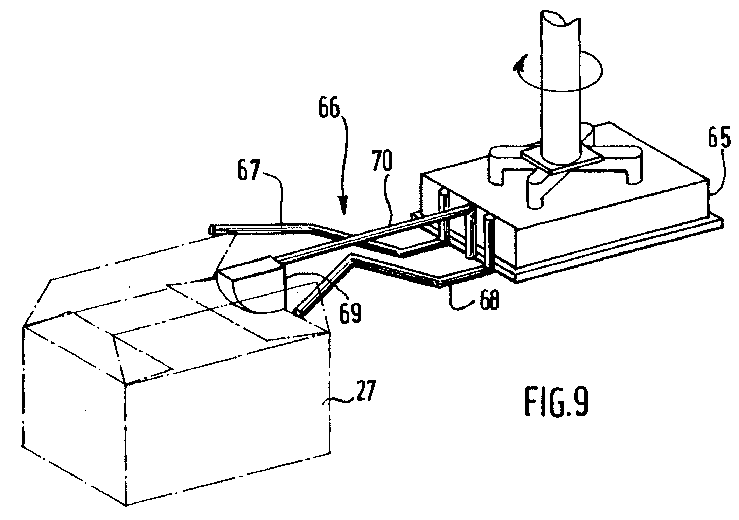

La figure 7 décrit une installation semblable à celle de la figure 6, à ceci près qu'il y a un poste 60 de marquage de cartons (par tout moyen approprié, et qu'il y a un cadre 61 de rabattage de rabat et un dispositif de fermeture 62 qui, au lieu d'être portés par la tête 63, sont fixés en une position prédéterminée, ici portés par un prolongement 64 de la table 54. Cette tête 63 est représentée à plus grande échelle à la figure 8. Elle est analogue à celle des figures 33 et 4 à ceci près qu'elle ne porte ni de cadre ni de dispositif de fermeture, mais la cloche 42 est rendue mobile en rotation par rapport au tronçon d'arbre 44 par un organe 64 d'entraînement en rotation. Cela permet d'utiliser le cadre 61 et le dispositif de fermeture 62 pour le collage aussi bien des rabats inférieurs que des rabats supérieurs d'un carton : il suffit pour cela de faire tourner la cloche autour de la barre 44 dans la configuration de la figure 4 pour retourner un carton vide.

La figure 9 représente une autre variante encore de tête de travail selon l'invention comportant une cloche d'aspiration axiale 65 portant, comme outil de conditionnement, un cadre de rabattage de rabats 66 disposé latéralement, analogue à celui des figures 3 et 4, à ceci près qu'il comporte deux tiges 67 et 68 de configuration appropriée et un doigt 69 de rabattage des petits côtés portés par une troisième tige 70.

Il va de soi que la description qui précède n'a été présentée qu'à titre d'exemple illustratif non limitatif et que de nombreuses variantes peuvent être proposées par l'homme de l'art sans sortir du cadre de l'invention. Ainsi la disposition des divers postes autour du robot d'une installation selon l'invention peut être adaptée aux besoins et à la place disponible. Les cloches d'aspiration peuvent être modifiées dans leur structure, leur géométrie et dans leurs positions réciproques et peuvent être remplacées par d'autres organes de préhension (griffes, pinces ...).

D'autre part, l'invention s'applique aussi à une installation de conditionnement caractérisée en ce qu'elle comporte :

- un robot polaire ou cartésien comportant une tête de travail munie d'un premier outil de conditionnement constitué d'un dispositif de préhension,
- plusieurs postes de conditionnement disposés dans le volume balayé par la tête.

**Revendications**

1. Dispositif de manutention comportant une tête de préhension reliée à son support par un arbre (2, 41) de liaison et qui est équipé de deux outils de travail, caractérisé en ce que :

- le premier de ces deux outils consiste en un outil de préhension axiale adapté à saisir un objet dans le prolongement de l'arbre de liaison (2, 41),
- le second outil est apte à agir, sur l'objet à manutentionner, selon une orientation différente de l'action du premier,
- les deux outils ainsi prévus sont adaptés à exécuter sur un emballage (5, 27) des opérations différentes intervenant dans sa mise en forme, sa manutention, son remplissage ou sa fermeture.

2. Dispositif de manutention selon la revendication 1, caractérisé en ce que sa tête de préhension (1) comporte, comme autre outil de travail, un dispositif de préhension latérale (4, 4', 42) pour la saisie d'un objet transversalement à l'arbre de liaison (2, 41).

3. Dispositif de manutention selon la revendication 1, caractérisé en ce que les deux outils de travail prévus sur sa tête de préhension (1), comportent en commun un organe de préhension (42) articulé sur l'arbre de liaison (41) entre la tête de préhension (1) et son support (16) , cet organe unique de préhension étant actionné en orientation par un organe de commande (43).

4. Dispositif de manutention selon la revendication 3, caractérisé en ce que l'organe commun articulé (42) de préhension est commandé en basculement par un vérin (43).

5. Dispositif de manutention selon la revendication 3, caractérisé en ce que sa tête de préhension (1) comporte deux cloches d'aspiration accolées (3, 3', 4, 4') dont l'une est orientée parallèlement à l'arbre de liaison (4') et l'autre transversalement à celui-ci.

6. Dispositif de manutention selon la revendication 5, caractérisé en ce que les deux cloches d'aspiration accolées (3, 3', 4, 4') déterminent conjointement un volume globalement parallélépipédique.

7. Dispositif de manutention selon la revendication 3 ou la revendication 4, caractérisé en ce que l'organe commun de préhension (42) est une cloche d'aspiration.

8. Dispositif de manutention selon l'une quelconque des revendications 5 à 7, caractérisé en ce que sa tête de préhension (1) comporte des organes individuels (50) à l'intérieur d'une cloche d'aspiration (42).

9. Dispositif de manutention selon l'une quelconque des revendications 1 à 8, caractérisé en ce que sa tête de préhension (1) comporte un outil de travail avec une paire de branches divergentes (49, 67, 68) et un dispositif pour fermer les rabats des cartons.

10. Dispositif de manutention selon l'une quelconque des revendications 1 à 9, caractérisé en ce que sa tête de préhension porte un outil de travail constitué par un dispositif de collage (10, 46).

11. Dispositif de manutention selon l'une quelconque des revendications 1 à 10, caractérisé en ce qu'il comporte un bras horizontal (17) adapté exclusivement à se déplacer transversalement à lui-même, le long duquel est monté coulissant un chariot-porteur (16) sur lequel est montée, pivotante autour d'un axe vertical, ladite tête de préhension (1, 1', 40).

12. Dispositif selon la revendication 11, caractérisé en ce que la tête comporte deux cloches d'aspiration accolées (3, 3', 4, 4') dont l'une est orientée verticalement et l'autre, horizontalement.

13. Dispositif selon la revendication 11, caractérisé en ce que la tête comporte une cloche unique d'aspiration (42) articulée sur un arbre (41) de liaison au chariot-porteur.

14. Installation de conditionnement comportant un dispositif de manutention selon l'une quelconque des revendications 1 à 13 et plusieurs postes de conditionnement disposés dans le volume balayé par la tête de préhension de ce dispositif.

15. Installation de conditionnement selon la revendication 14, caractérisée en ce qu'elle comporte, outre ce dispositif de manutention :
    - un magasin (26) de cartons pliés à plat, accessible à la tête, et
    - un poste (22, 23) de remplissage de cartons.

16. Installation selon la revendication 15, caractérisée en ce qu'elle comporte en outre des postes de pliage et de collage de rabats de cartons (35, 28 ; 61, 62, 64).

17. Installation selon la revendication 15 ou la revendication 16, caractérisée en ce que la tête porte en outre un ensemble de collage ou de fermeture des rabats.

18. Installation selon l'une quelconque des revendications 14 à 17, caractérisée en ce qu'elle comporte un poste de palettisation.

**Claims**

1. Handling device comprising a gripping head coupled to its support by means of a connecting shaft (2, 41) and equipped with two work tools, characterized in that :
    - the first of these two tools consists of an axial gripping tool adapted to take hold of an object in the line of extension of the connecting shaft (2, 41),
    - the second tool is capable of acting on the object to be handled, in an orientation which is different from the action of the first,
    - the two tools thus provided are adapted to perform on a package (5, 27) different operations which play a part in shaping, handling, filling or closing of said package.

2. Handling device in accordance with claim 1, characterized in that its gripping head (1) comprises another work tool consisting of a lateral gripping device (4, 4', 42) for taking hold of an object transversely to the connecting shaft (2, 41).

3. Handling device in accordance with claim 1, characterized in that the two work tools provided on its gripping head (1) have a common gripping element (42) which is pivotally mounted on the connecting shaft (41) between the gripping head (1) and its support (16), said single gripping element being actuated in a movement of orientation by a control member (43).

4. Handling device in accordance with claim 3, characterized in that the common articulated gripping element (42) is displaced in pivotal motion by means of a jack (43).

5. Handling device in accordance with claim 3, characterized in that its gripping head (1) has two juxtaposed suction bell-housings (3, 3', 4, 4'), one being oriented parallel to the connecting shaft (4') and the other being oriented transversely to this latter.

6. Handling device in accordance with claim 5, characterized in that the two juxtaposed suction bell-housings (3, 3', 4, 4') determine conjointly a generally parallelepipedal volume.

7. Handling device in accordance with claim 3 or claim 4, characterized in that the common gripping element (42) is a suction bell-housing.

8. Handling device in accordance with any one of claims 5 to 7, characterized in that its gripping head (1) comprises individual elements (50) within a suction bell-housing (42).

9. Handling device in accordance with any one of claims 1 to 8, characterized in that its gripping head (1) comprises a work tool with a pair of divergent arms (49, 67, 68) and a device for closing the flaps of cardboard boxes.

10. Handling device in accordance with any one of claims 1 to 9, characterized in that its gripping head carries a work tool consisting of a gluing device (10, 46).

11. Handling device in accordance with any one of claims 1 to 10, characterized in that it comprises a horizontal arm (17) adapted solely to move in a direction transverse to itself, there being slidably mounted on said arm a carriage (16) on which said gripping head (1, 1', 40) is mounted so as to be capable of pivoting about a vertical axis.

12. Device in accordance with claim 11, characterized in that the head comprises two juxtaposed suction bell-housings (3, 3', 4, 4'), one being oriented vertically and the other being oriented horizontally.

13. Device in accordance with claim 11, characterized in that the head comprises a single suction bell-housing (42) pivotally mounted on a shaft (41) which provides a connection with the carriage.

14. Packaging installation comprising a handling device in accordance with any one of claims 1 to 13 and a plurality of packaging stations disposed within the volume swept by the gripping head of said device.

15. Packaging installation in accordance with claim 14, characterized in that it comprises, in addition to said handling device :
    - a magazine (26) for cardboard boxes folded flat and accessible to the head, and
    - a station (22, 23) for filling cardboard boxes.

16. Installation in accordance with claim 15, characterized in that it comprises in addition stations for folding and gluing cardboard box flaps (35, 28 ; 61, 62, 64).

17. Installation in accordance with claim 15 or claim 16, characterized in that the head carries in addition a unit for gluing or closing the flaps.

18. Installation in accordance with any one of claims 14 to 17, characterized in that it comprises a palletization station.

**Ansprüche**

1. Handhabungsvorrichtung mit einem Greifkopf, der über eine Verbindungswelle (2, 41) mit seinem Träger verbunden ist und zwei Bearbeitungwerkzeuge aufweist,
   **dadurch gekennzeichnet,**
   daß das erste dieser beiden Werkzeuge ein axiales Greifwerkzeug ist zum Ergreifen eines Gegenstands in Verlängerung der genannten Verbindungswelle (2, 41),
   daß das zweite Werkzeug in einer anderen Richtung auf den zu handhabenden Gegenstand einwirken kann als das erste Werkzeug,
   und daß die beiden Werkzeuge verschiedene Arbeitsvorgänge beim Ausformen, Handhaben, Füllen oder Schließen einer Verpackung (5,27) ausführen können.

2. Handhabungsvorrichtung nach Anspruch 1,
   **dadurch gekennzeichnet,**
   daß der Greifkopf (1) als weiteres Arbeitswerkzeug eine Vorrichtung (4, 4', 42) zum seitlichen Ergreifen eines Gegenstands in einer Richtung quer zu der Verbindungswelle (2, 41) aufweist.

3. Handhabungsvorrichtung nach Anspruch 1,
   **dadurch gekennzeichnet,**
   daß die beiden Bearbeitungswerkzeuge an dem Greifkopf (1) ein gemeinsames Greiforgan (42) besitzen, das zwischen dem Greifkopf (1) und seinem Träger (16) gelenkig an der Verbindungswelle (41) angeordnet ist, wobei die Orientierung dieses einzigen Greiforgans durch ein Steuerorgan (43) bewirkt wird.

4. Handhabungsvorrichtung nach Anspruch 3,
   **dadurch gekennzeichnet,**
   daß das gelenkig angeordnete gemeinsame Greiforgan (42) von einem Antriebszylinder (43) verschwenkbar ist.

5. Handhabungsvorrichtung nach Anspruch 3.
   **dadurch gekennzeichnet,**
   daß an dem Greifkopf (1) zwei Saugglocken (3, 3' , 4, 4') angebracht sind, von denen die eine (4') parallel und die andere quer zu der Verbindungswelle angeordnet ist.

6. Handhabungsvorrichtung nach Anspruch 5,
   **dadurch gekennzeichnet,**
   daß die beiden Saugglocken (3, 3' , 4, 4') zusammen ein im wesentlichen quaderförmiges Volumen begrenzen.

7. Handhabungsvorrichtung nach Anspruch 3 oder 4,
   **dadurch gekennzeichnet,**
   daß das gemeinsame Greiforgan (42) eine Saugglocke ist.

8. Handhabungsvorrichtung nach einem der Ansprüche 5 bis 7,
   **dadurch gekennzeichnet,**
   daß der Greifkopf (1) einzelne Organe (50) innerhalb einer Saugglocke (42) aufweist.

9. Handhabungsvorrichtung nach einem der Ansprüche 1 bis 8,
   **dadurch gekennzeichnet,**
   daß der Greifkopf (1) ein Bearbeitungswerkzeug mit zwei divergierenden Schenkeln (49' 67, 87) und eine Vorrichtung zum Schließen von Umschlagklappen der Kartons aufweist.

10. Handhabungsvorrichtung nach einem der Ansprüche 1 bis 9,
    **dadurch gekennzeichnet,**
    daß sein Greifkopf ein Bearbeitungswerkzeug trägt, das aus einer Klebevorrichtung (10, 46) besteht.

11. Handhabungsvorrichtung nach einem der Ansprüche 1 bis 10,
    **dadurch gekennzeichnet,**
    daß ein horizontaler Arm (17) vorgesehen ist, der ausschließlich quer zu sich selbst verschiebbar ist und längs dessen ein Tragschlitten (16) gleiten kann, an dem der Greifkopf (1, 1', 40) um eine vertikale Achse schwenkbar montiert ist.

12. Handhabungsvorrichtung nach Anspruch 11,
    **dadurch gekennzeichnet,**
    daß an dem Greifkopf zwei Saugglocken (3, 3', 4, 4') angebracht sind, von denen die eine vertikal und die andere horizontal ausgerichtet ist.

13. Handhabungsvorrichtung nach Anspruch 11,
    **dadurch gekennzeichnet,**
    daß der Greifkopf eine einzige Saugglocke (42) besitzt, die gelenkig an einer mit dem Tragschlitten verbundenen Verbindungswelle (41) angeordnet ist.

14. Verpackungsanlage mit einer Handhabungsvorrichtung nach einem der Ansprüche 1 bis 13 und mehreren Verpackungsstationen, die innerhalb des von dem Greifkopf der Vorrichtung erreichbaren Volumens angeordnet sind.

15. Verpackungsanlage nach Anspruch 14,
    **dadurch gekennzeichnet,**
    daß sie außer der Handhabungsvorrichtung folgende Teile aufweist:
    - ein für den Greifkopf zugängliches Magazin (26) mit flach gefalteteten Kartons und
    - eine Station (22, 23) zum Füllen der Kartons.

16. Verpackungsanlage nach Anspruch 15,
    **dadurch gekennzeichnet,**
    daß außerdem Stationen zum Falten und Kleben der Karton-Umschlagklappen (35, 28; 61, 62, 64) vorgesehen sind.

17. Verpackungsanlage nach Anspruch 15 oder 16,
    **dadurch gekennzeichnet,**
    daß der Greifkopf außerdem eine Einheit zum Kleben oder Schließen der Umschlagklappen trägt.

18. Verpackungsanlage nach einem der Ansprüche 14 bis 17,
    **dadurch gekennzeichnet,**
    daß sie eine Palletierstation umfaßt.

FIG.1

FIG.2

FIG.3

FIG.4

**FIG.5**

**FIG.8**

FIG.6

FIG.7

FIG.9